# EUROPÄISCHE PATENTSCHRIFT

(11) **EP 0 840 680 B1**
(45) Veröffentlichungstag und Bekanntmachung des Hinweises auf die Patenterteilung: **03.02.1999**
(21) Anmeldenummer: 96921814.8
(22) Anmeldetag: 16.07.1996
(51) Int. Cl.: B60K 41/12, B60K 41/16, F16H 47/04

(54) **VERFAHREN ZUM BETREIBEN EINER AUS EINEM VERBRENNUNGSMOTOR UND AUS EINEM LEISTUNGSVERZWEIGUNGSGETRIEBE BESTEHENDEN STUFENLOSEN ANTRIEBSEINHEIT**
PROCESS FOR OPERATING A STEPLESS DRIVE UNIT CONSISTING OF AN INTERNAL COMBUSTION ENGINE AND A POWER BRANCHING TRANSMISSION
PROCEDE PERMETTANT DE FAIRE FONCTIONNER UNE UNITE D'ENTRAINEMENT A REGLAGE CONTINU, CONSTITUEE PAR UN MOTEUR A COMBUSTION INTERNE ET PAR UNE TRANSMISSION A DERIVATION DE PUISSANCE

(30) Priorität: 24.07.1995 DE 19527015
(43) Veröffentlichungstag der Anmeldung: 13.05.1998
(73) Patentinhaber: STEYR-DAIMLER-PUCH AKTIENGESELLSCHAFT, 1010 Wien (AT)
(72) Erfinder: WÖNTNER, Gebhard, A-4493 Wolfern (AT); ULBRICH, Peter, A-4441 Behamberg (AT)
(86) Internationale Anmeldenummer: AT9600124
(87) Internationale Veröffentlichungsnummer: WO9703857

(56) Entgegenhaltungen:
- WO-A-90/02058
- WO-A-90/02059
- DE-A- 4 104 167

## Beschreibung

Die Erfindung handelt von einem Verfahren zum Betreiben einer aus einem Verbrennungsmotor und einem kontinuierlich steuerbaren Verzweigungsgetriebe bestehenden Antriebseinheit, deren Getriebe aus einer stufenlos steuerbaren hydrostatischen Motor-Pumpe-Einheit und aus einem Summierungsgetriebe mit zugeordneten Bereichsgetrieben für aufeinanderfolgende Übersetzungsbereiche besteht, wobei die Umschaltung von einem Bereich zum nächsten in einem vorbestimmten Schaltpunkt durch Schließen der dem nächsten Bereich zugeordneten Kupplung und in der Folge Öffnen der dem vorhergehenden Bereich zugeordneten Kupplung erfolgt.

Ein Verzweigungsgetriebe der erwähnten Bauart und ein derartiges Verfahren sind aus der DE,A,4104167 bekannt. Beim Beschleunigen wird in diesem Getriebe zuerst in einem ersten Bereich die hydrostatische Einheit von einer Nenndrehzahl in einem Drehsinn bis zur Nenndrehzahl im entgegengesetzten Drehsinn gesteuert. Im Summierungsgetriebe wird die Drehung dieses hydrostatischen Zweiges dem mechanischen Zweig überlagert und im nachgeschalteten Bereichsgetriebe auf die Abtriebsdrehzahl gebracht. Um die Beschleunigung fortzusetzen, wird in einem vorbestimmten Schaltpunkt, in dem die Abtriebsdrehzahlen verschiedener Glieder des Bereichsgetriebes gleich sind, vom ersten auf das zweite Glied umgeschaltet. In diesem zweiten Bereich wird die hydrostatische Einheit wieder zurück gesteuert bis zur Nenndrehzahl im anfänglichen Drehsinn. Darauf können noch weitere Bereiche folgen. Somit kann mit konstanter Motordrehzahl durch Verstellen der hydrostatischen Einheit bis auf eine gewählte Geschwindigkeit beschleunigt werden, wodurch der Motor immer im günstigsten Betriebspunkt seines Kennfeldes betrieben wird.

Bei der Anwendung des angegebenen Schaltverfahrens für eine Arbeitsmaschine ergibt sich aber ein Problem, wenn ein Betriebspunkt an der Grenze zwischen zwei Bereichen, also in der Nähe des Schaltpunktes, gewählt wird. Dann kann es durch kleine Lastschwankungen zu wiederholtem Hinauf- und Hinunterschalten kommen. Zur Lösung dieses Problemes wird in der DE,A,4104167 vorgeschlagen, die Kupplung des vorhergehenden Bereiches einfach nicht zu öffnen, sodaß die Übersetzung im Schaltpunkt festgehalten ist. Das ist im Effekt eine Schaltsperre.

Dazu wird dort eine Hysterese-Einrichtung vorgeschlagen, die durch ein Signal angesteuert wird, das resultiert aus einer bestimmten Zeitgröße oder/und einer Differenz der Lastgröße und/oder in Abhängigkeit von einer Betriebsgröße.

Aus der EP,A,429503 (entspricht dem Dokument WO 90/02058) ist es bekannt, im Bereich der Schaltpunkte eine Schaltunterdrückung vorzusehen. Dabei wird bei Überschreiten der Bereichsgrenze von dieser aus die Übersetzung konstant gehalten und die Drehzahl des Motors variiert. Um die Übersetzung konstant zu halten, müßte die hydrostatische Einheit aber in ihrer momentanen Stellung genau festgehalten werden, was wegen deren hydraulischer Ansteuerung nicht möglich ist. Die unvermeidlichen Schwankungen, etwa durch Änderung des hydrostatischen Schlupfes bei Lastschwankungen könnten trotzdem zu einer ungewollten Bereichsschaltung führen. Außerdem beeinträchtigen solche Schwankungen auch die Regelung der Motordrehzahl.

Wenn ein Betriebspunkt nahe der oberen Bereichsgrenze anzufahren ist, so ist eine erhebliche Steigerung der Motordrehzahl erforderlich, was den Verschleiß des Motors erhöht und den Wirkungsgrad vermindert. Schließlich ist in dem Moment, in dem die Bereichsgrenze überschritten wird, noch nicht feststellbar, ob der Bereich nur durchfahren werden soll, oder ob ein Betriebspunkt in dem Bereich für längere Zeit gewählt wurde. Der Fahrer kann es sich ja jederzeit anders überlegen und den Fahrhebel betätigen. Wenn er etwa die Beschleunigung abbricht, um einen Betriebspunkt innerhalb der Bereichsgrenzen zu wählen, ist die Schaltunterdrückung außer Kraft gesetzt. Wenn er von einem Betriebspunkt innerhalb der Bereichsgrenzen beschleunigen will, muß der Motor das bei der erhöhten Drehzahl leisten, die er an der oberen Bereichsgrenze erreicht hat.

Es ist somit Aufgabe der Erfindung, ein gattungsgemäßes Verfahren zu schaffen, das den Betrieb einer Antriebseinheit der beschriebenen Art auch in Betriebspunkten in der Nähe der Schaltpunkte bei zuverlässiger Schaltunterdrückung gestattet, bei möglichst geringem Verschleiß und Treibstoffverbrauch.

Das wird erfindungsgemäß mit einem Verfahren nach den Schritten a) bis e) des ersten Anspruches erreicht. Dadurch sind anhand von nur drei Kriterien (Erreichen der Intervallgrenze, deren Überschreiten auswärts oder einwärts, und Erreichen des Schaltpunktes) sämtliche denkbaren Fahrzustände zu bewältigen:
Wird eine Intervallgrenze von außen nach innen überschritten (egal, ob die obere oder die untere), so wird das nur registriert, es passiert aber noch nichts. Erst wenn der Schaltpunkt erreicht ist, schließt die zweite Kupplung und bleibt geschlossen; erst, wenn eine Intervallgrenze auswärts überschritten wird, öffnet die jeweilige Kupplung. Auf diese Weise werden Betriebspunkte jenseits des Schaltpunktes erreicht.

Liegt der gewünschte Betriebspunkt im Intervall aber vor dem Schaltpunkt, so wird Überschreiten einer Intervallgrenze von außen wieder nur registriert; wenn der Betriebspunkt später ohne Passieren des Schaltpunktes wieder verlassen wird, wird nichts geschehen sein. Wenn in diesem Betriebspunkt jedoch durch geringfügige Lastabsenkung (z.B. Steigungsänderung der Fahrbahn) der Schaltpunkt erreicht wird, schließt die zweite Kupplung und bleibt geschlossen, bis eine der Intervallgrenzen wieder auswärts überschritten wird.

Somit werden alle möglichen Betriebspunkte innerhalb des Intervalles (entsprechend dem Bereich) entweder vom Schaltpunkt (Synchronpunkt) aus (wenn sie jenseits dessen liegen), oder ohne irgendwelche besonderen Maßnahmen (wenn sie vor diesem liegen) angefahren. Im letzteren Fall wird erst später eingegriffen, wenn eine Laständerung zum Einleiten der Schaltung führt. Die Fallunterscheidung führt also zu Maßnahmen zu verschiedenen Zeitpunkten.

Das alles bringt weitere entscheidende Vorteile:
1) Der Betriebspunkt wird von der Mitte des Intervalles aus durch Heben oder Senken der Drehzahl angefahren, die Drehzahlsteigerung ist daher maximal halb so groß. Das trifft auch zu, wenn dann von dem Betriebspunkt aus wieder oder weiter beschleunigt werden soll.
2) Während der Steuerung über die Motordrehzahl wird die Übersetzung durch die beiden eingerückten Kupplungen zwangsläufig und genau auf dem Schaltpunkt (Synchronpunkt) festgehalten. Es gibt daher keine durch die Steuerung der hydrostatischen Einheit bedingte Schwankungen, die zu einer ungewollten Bereichsschaltung oder zu einer Beeinträchtigung der Regelung der Motordrehzahl führen könnten.
3) Solange beide Kupplungen eingerückt sind, ist die hydrostatische Einheit im wesentlichen lastlos, was ihrer Lebensdauer, dem Wirkungsgrad des Gesamtgetriebes und der Schlupfkorrektur vor dem Lösen der jeweiligen Bereichskupplung beim Verlassen des Betriebspunkts zugute kommt.
4) Dadurch, daß das Überschreiten einer Intervallgrenze zunächst nur registriert wird, jedoch alleine noch zu keinem Eingriff führt, muß die Entscheidung, ob es sich um ein Durchbeschleunigen oder um das Anfahren eines Betriebspunktes im Intervall handelt, erst zum spätest möglichen Zeitpunkt getroffen werden, wenn der Schaltpunkt erreicht ist. Somit kann auch ein plötzlicher Sinneswandel des Fahrers oder eine unbedachte Betätigung des Fahrpedales nicht zu einer ungewollten Bereichsschaltung führen.
5) Die Intervallgrenzen können sehr nahe an den Schaltpunkt gelegt werden, weil nach dessen Überschreiten einwärts zunächst einmal nichts passiert.

In weiterer Ausgestaltung der Erfindung können die Intervallgrenzen bezüglich des Schaltpunktes sogar unsymmetrisch und für Überschreiten auswärts und einwärts unterschiedlich definiert sein (Anspruch 2), da wegen der besonderen Wirkung des erfindungsgemäßen Verfahrens die Einwärts-Intervallgrenze sehr nahe am Schaltpunkt liegen kann (Anspruch 3). Dadurch wird der Vorteil erzielt, daß beim Verlassen eines Betriebspunktes im Intervall der Ausschlag der Regelung der Motordrehzahl weiter verringert wird. Dadurch entfernt sich der Antriebsmotor weniger von der Drehzahl des besten Wirkungsgrades. Das verbessert den Gesamtwirkungsgrad der Antriebseinheit weiter.

Schließlich liegt es im Rahmen der Erfindung, den Hydrostaten lastlos zu schalten, sobald die dem nächsten Bereich zugeordnete Kupplung geschlossen wird und den Hydrostaten erst wieder zu belasten, bevor die dem vorhergehenden Bereich zugeordnete Kupplung geöffnet wird (Anspruch 4). Dadurch werden die Verluste im Hydrostaten während die Steuerung über Variieren der Motordrehzahl erfolgt, deutlich vermindert. Da sind ja beide Kupplungen geschlossen und die Kraftübertragung erfolgt ausschließlich über den mechanischen Zweig.

Im folgenden wird die Erfindung anhand von Abbildungen beschrieben und erläutert. Es stellen dar:
- Fig.1:: Getriebeschema in einer vorteilhaften Ausführungsform,
- Fig.2:: Kupplungsschaltschema zum Getriebe der Fig.1,
- Fig.3:: Drehzahlplan zum Getriebe der Fig.1 in den normalen Bereichen,
- Fig.4:: Vergrößertes Detail C aus dem Drehzahlplan der Fig.3.in einer Gruppe von Betriebszuständen,
- Fig.5:: Vergrößertes Detail C aus dem Drehzahlplan der Fig.3.in einer anderen Gruppe von Betriebszuständen.

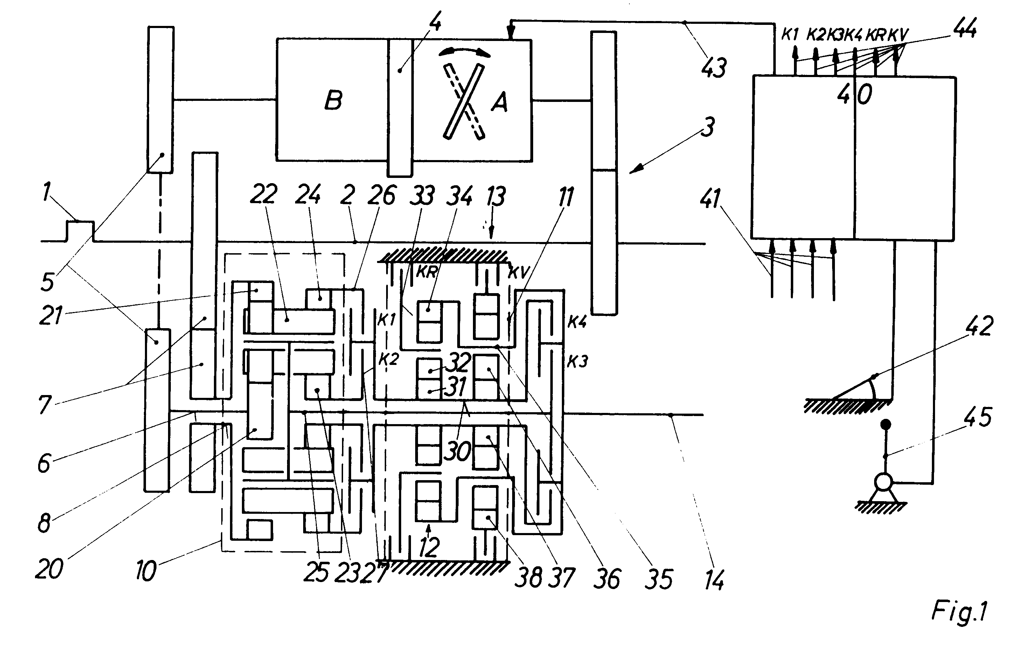

In Fig.1 ist der Motor 1, etwa eine Verbrennungskraftmaschine, nur angedeutet. Er treibt ohne der zwischen liegenden Kupplung eine Getriebeeingangswelle 2. Diese treibt einerseits über eine erste Zahnradtransmission 3 eine steuerbare Hydrostateinheit 4, deren Ausgang über eine zweite Zahnradtransmission 5 eine erste Eingangswelle 6 antreibt. Andererseits treibt die Getriebeeingangswelle 2 über eine dritte Zahnradtransmission 7 eine zweite Eingangswelle 8. Die Hydrostateinheit 4 besteht aus zwei hydrostatischen Maschinen A,B, wovon immer eine als Motor und eine als Pumpe arbeitet. Die Maschine A ist stufenlos in beiden Drehrichtungen steuerbar.

Die beiden Eingangswellen 6,8 sind Teil eines Summierungsplanetengetriebes 10, von dem aus über Kupplungen K1,K2 ein Stufengetriebe 11 angetrieben wird, welches hier aus einer ersten Planetengetriebestufe 12 mit einer Kupplung KR und einer zweiten Planetengetriebestufe 13 mit einer Kupplung KV besteht. Über Kupplungen K3,K4 wird eine Abtriebswelle 14 geschaltet, die beispielsweise dem Antrieb eines Fahrzeuges dient.

Das Summierungsplanetengetriebe 10 enthält eine erste Sonne 20, ein erstes Hohlrad 21 und abgestufte Planeten 22, die den ersten Planetensatz bilden. Der zweite Planetensatz besteht aus einer zweiten Sonne 23, einem Hohlrad 24 und den abgestuften Planeten 22, die beiden Sätzen gemeinsam sind. Die Planeten 22 sind auf einem Planetenträger gelagert, dessen Welle 25 die erste Ausgangswelle des Summierungsplanetengetriebes 10 darstellt. Das zweite Hohlrad 24 wirkt über eine Hohlradwelle 26 auf die Kupplung K1 und stellt die zweite Ausgangswelle dar. Die zweite Sonne 23 wirkt über eine Sonnenwelle 27 auf die Kupplung K2 und stellt die dritte Ausgangswelle des Summierungsplanetengetriebes 10 dar.

Die erste Stufe 12 des Stufengetriebes 11 besteht aus einem ersten Sonnenrad 31, ersten Planetenrädern 32, einem ersten Planetenträger 33 und einem ersten Ringrad 34. Die Sonnenradwelle 30 wird wahlweise von einer der beiden Kupplungen K1,K2 angetrieben, der erste Planetenträger 33 ist mittels der Kupplung KR am stationären Gehäuse festbremsbar. Das erste Ringrad 34 ist mit einem zweiten Planetenträger 35 der zweiten Planetengetriebestufe 13 drehfest verbunden. Dessen Planetenräder 36 kämmen innen mit einem zweiten Sonnenrad 37, das mit der Sonnenradwelle 30 drehfest verbunden ist und außen mit einem zweiten Ringrad 38, welches über die Kupplung KV am Gehäuse festbremsbar ist. Die Abtriebswelle 14 ist mit dem zweiten Planetenträger 35 drehfest verbunden und über die Kupplungen K3,K4 entweder mit der Planetenträgerwelle 25 oder mit der Sonnenradwelle 30 drehfest verbindbar.

Weiters ist ein Steuergerät 40 angedeutet. Dieses erhält über Signalleitungen 41 gemessene Betriebs- und Fahrparameter sowie von einem Fahrpedal 42 eine Last- bzw Geschwindigkeitsvorgabe. Aus diesen Signalen bildet das Steuergerät 40 Steuersignale für den Hydrostaten 4, die diesem über die Steuerleitung 43 übermittelt werden und Steuersignale 44 für die Kupplungen K1,K2, K3,K4,KR,KV. Schließlich ist noch ein Vorwählschalter 45 vorgesehen, den der Fahrer betätigt, um die andere Schaltstrategie über den weiteren Bereich zu wählen.

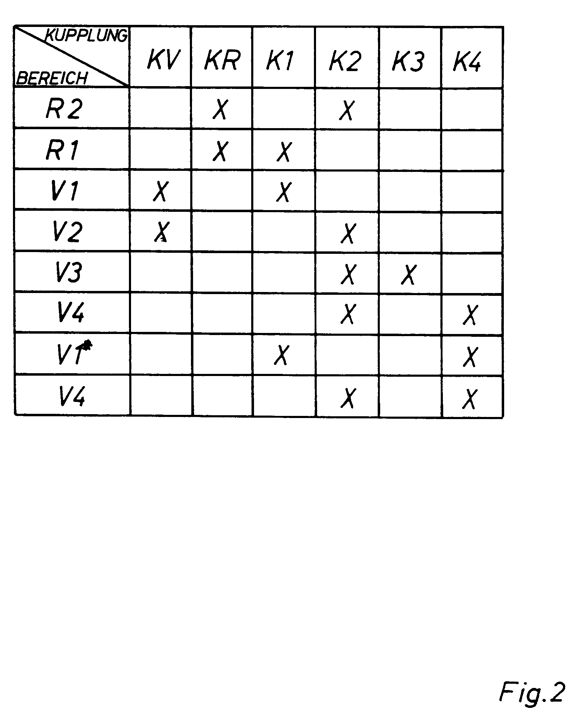

Fig.2 zeigt tabellarisch, welche Kupplungen in den einzelnen Fahrbereichen geschlossen sind, wobei der geschlossene Zustand durch ein X in der jeweiligen Zeile und Spalte angedeutet ist. In dem als Beispiel gewählten Getriebe sind zwei Rückwärtsbereiche R1,R2 und vier Vorwärtsbereiche V1,V2,V3 und V4 vorgesehen. Die ersten sechs Zeilen entsprechen den normalen Bereichen, in der siebenten Zeile ist der Bereich V1* der weitere Bereich, der die Bereiche V1,V2 und V3 überbrückt. In der letzten Zeile erscheint der daran anschließende normale Bereich V4. Es ist zu erkennen, daß die Umschaltung auch hier durch das Öffnen der Kupplung K1 und das Schließen der Kupplung K2 erfolgt.

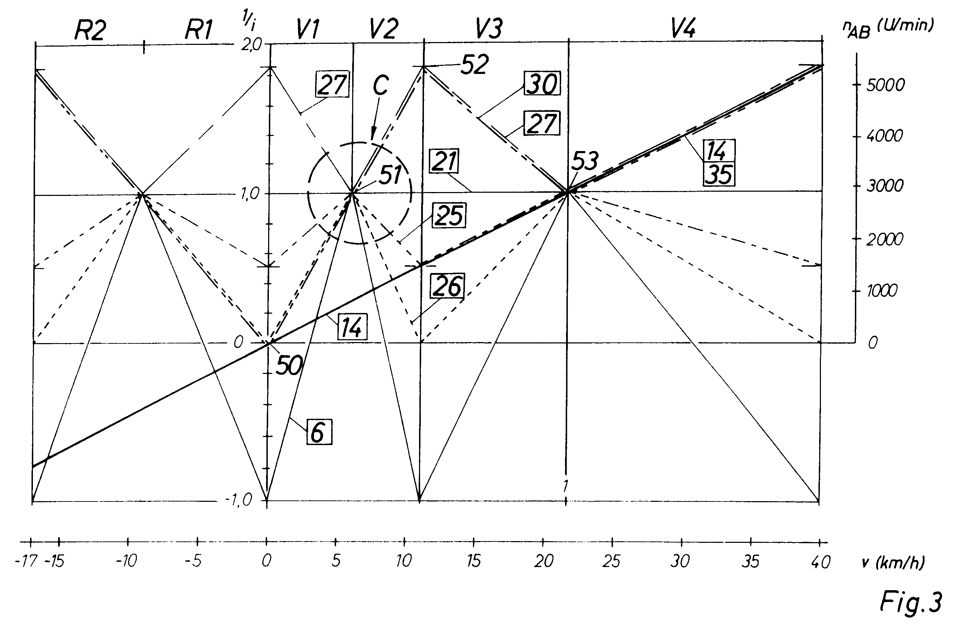

Nun wird anhand des Geschwindigkeitsplanes der Fig.3 unter Bezugnahme auf die Figuren 1 und 2 der normale Ablauf der Bereichsschaltungen beschrieben. Auf der Abszisse ist die Geschwindigkeit des Fahrzeuges aufgetragen, auf der Ordinate die Drehzahlen, am rechten Bildrand. Auf der der Geschwindigkeit 0 entsprechenden Abszisse sind die Regelstellungen des Hydrostaten 4 aufgetragen, die hier weniger interessieren. Am horizontalen oberen Bildrand sind die Bereiche entsprechend der Fig.2 und durch eine vertikale Linie die Bereichsgrenzen eingetragen. Im ersten Fahrbereich V1 sind die Kupplungen K1 und KV geschlossen. Der Antrieb erfolgt über die Hohlradwelle 26 und die zweite Planetengetriebestufe 13. In diesem Bereich wird der Hydrostat 4 und damit auch die Drehzahl der ersten Eingangswelle 6 von -1 bis +1 durchfahren. Dabei wird die Sonnenradwelle 30 von der Geschwindigkeit 0 im Anfangspunkt 50 bis zum ersten Synchronpunkt 51, mit dem der zweite Bereich V2 beginnt, hochgefahren. In diesem Punkt sind die Drehzahlen von Hohlradwelle 26 und Sonnenwelle 27 gleich, die Kupplung K2 wird geschlossen und die Kupplung K1 geöffnet. Der Hydrostat 4 und mit ihm die erste Eingangswelle 6 durchlaufen nun ihren Drehzahlbereich im umgekehrten Sinn von +1 bis -1. In diesem Punkt 52 wird die Kupplung K3 geschlossen und die Kupplung KV geöffnet. Es wird der dritte Bereich V3 durchfahren, bis der zweite Synchronpunkt 53, erreicht ist. Da in diesem die Planetenträgerwelle 25 und die Sonnenradwelle 30 gleich schnell drehen, können die Kupplungen umgeschaltet werden. Soweit der Verlauf bei den normalen Bereichsschaltungen.

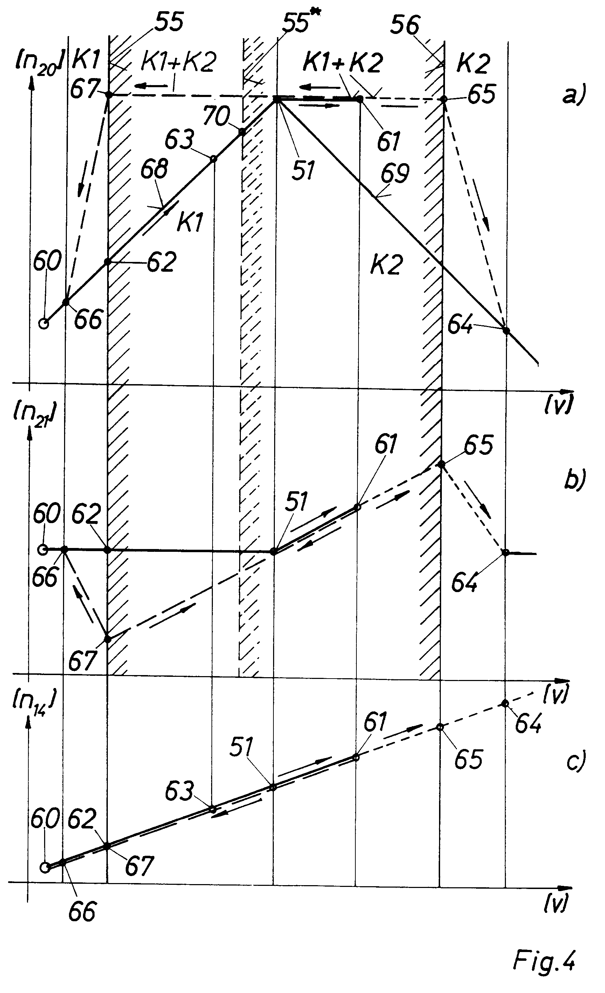

In Figur 4 ist die Umgebung des Schaltpunktes 51 (Detail C in Figur 3) stark vergrößert dargestellt. Außerdem sind die verschiedenen Linien des Geschwindigkeitsplanes auseinandergezogen, wodurch sich die Figuren 4a, 4b und 4c ergeben. In allen dreien ist auf der Ordinate die Geschwindigkeit v und auf der Abzisse die jeweilige Drehzahl n angegeben, und zwar in Figur 4 a) die Drehzahl des Hydrostaten (n₂₀), in Figur 4 b) die Drehzahl der Verbrennungskraftmaschine (n₂₁) und in Figur 4 c) die Drehzahl der Abtriebswelle (n₁₄). Die Grenzen des definierten, den Schaltpunkt 51 enthaltenden Intervalles sind nach innen schraffiert und mit 55 (untere Intervallgrenze) und 56 (obere Intervallgrenze) bezeichnet.

Wird nun, ausgehend von einem momentanen Betriebspunkt 60, der außerhalb des Intervalles bei kleinerer Geschwindigkeit liegt, vom Fahrer ein Zielbetriebspunkt 61 gewählt, der innerhalb des Intervalles und jenseits des Schaltpunktes 51 liegt, so erkennt das die Steuerung durch Vergleich und merkt es sich. Nun wird durch Verstellung des Hydrostaten (Figur 4a) bei konstanter Motordrehzahl (Figur 4b) bis an die untere Intervallgrenze 55 gesteuert. Überschreiten der unteren Intervallgrenze 55 wird auch registriert und gemerkt, es wird jedoch über den Hydrostaten weitergesteuert, bis der Schaltpunkt 51 erreicht ist, wobei im Schaltbereich V1 nur die Kupplung K1 geschlossen ist. Bei Erreichen des Schaltpunktes 51 wird nun auch die Kupplung K2 geschlossen, so wie es bei normalem Durchfahren zu einem Zielpunkt außerhalb des Intervalles der Fall sein würde. Da aber die Steuerung weiß, daß ein Betriebspunkt 61 im Inneren des Intervalles anzusteuern ist und da sie auch weiß, daß die Intervallgrenze 55 bereits überschritten wurde, wird die Kupplung K1 nicht geöffnet und die Steuerung erfolgt durch Anheben der Motordrehzahl (von 51 bis 61 in Figur 4 b). Auf die Weise wird der Betriebspunkt 61 mit leicht angehobener Motordrehzahl erreicht und das Fahrzeug kann nun dauernd in diesem Betriebspunkt betrieben werden, ohne daß bei geringfügiger Laständerung eine unerwünschte Bereichschaltung zu befürchten wäre.

Wird, ausgehend vom außerhalb des Intervalles liegenden Betriebspunkt 60 ein Betriebspunkt 63 innerhalb des Intervalles, jedoch vor dem Schaltpunkt 51 gewählt, so wird wie im vorhergehenden Fall Passieren der unteren Intervallgrenze 55 im Punkt 62 registriert und der Betriebspunkt 63 wird ganz gewöhnlich durch Verstellen des Hydrostaten angesteuert. Man befindet sich nun zwar im Intervall und knapp unter dem Schaltpunkt, aber die Steuerung wirkt wie in irgendeinem Betriebspunkt außerhalb des Intervalles. Wenn sich dieser Betriebspunkt im Laufe des weiteren Betriebes aber durch äußere Umstände (z.B. Veränderung des Fahrwiderstandes) verschiebt und dabei den Schaltpunkt 51 erreicht, erfolgt nun die Schaltung wie weiter oben erläutert. Das heißt, beide Kupplungen bleiben geschlossen, bis eine der beiden Intervallgrenzen 55, 56 von innen nach außen überschritten wird. Sie bleiben also auch geschlossen, wenn irgend ein anderer Betriebspunkt innerhalb des Intervalles angefahren werden soll.

Soll nun von einem im Inneren des Intervalles liegenden Betriebspunkt wieder ein neuer, außerhalb des Intervalles liegender angesteuert werden, so gibt es zwei Möglichkeiten: entweder er liegt auf derselben Seite der den Lastpunkt 51 angebenden Vertikalen (in den Figuren kurz strichliert), oder er liegt auf der anderen Seite (in den Figuren lang strichliert). Der Lastpunkt 64 liegt auf derselben Seite, also bei höherer Geschwindigkeit als der vorhergehende Lastpunkt 61. Da ein Öffnen der beiden Kupplungen K1, K2 innerhalb des Intervalles und solange über die Drehzahl des Antriebsmotors gesteuert wird nicht möglich ist, wird bis zum Erreichen der oberen Intervallgrenze 56 die Motordrehzahl n₂₁ gesteuert, bis der Punkt 65 (Figur 4a,4b) erreicht ist. In diesem Punkt wird erst die Kupplung K1 geöffnet und die Hydrostatsteuerung übernimmt wieder. Gemäß Figur 4b wird nun die Motordrehzahl n₂₁ von dem erhöhten Niveau (65 in Figur 4b) wieder auf das normale Niveau bei 64 (Figur 4b) zurückgeführt. Die Steuerung des Hydrostaten muß nun zusätzlich zu der für die Beschleunigung von 65 zu 64 in Figur 4 c) erforderlichen Verstellung auch noch das Zurücknehmen der Motordrehzahl von 65 zu 64 in Figur 4 b) kompensieren. Bei weiterem Beschleunigen über den Punkt 64 hinaus erfolgt die Steuerung wieder in gewöhnlicher Weise nur durch Verstellen des Hydrostaten bei konstanter Motordrehzahl n₂₁ (Figur 4b).

Soll hingegen vom Betriebspunkt 61 aus ein Betriebspunkt 66 außerhalb der unteren Intervallgrenze 55 angefahren werden, so geschieht das folgendermassen (lang strichliert): Da innerhalb des Intervalles keine der beiden Kupplungen geöffnet werden darf, wird durch Absenken der Motordrehzahl n₂₁ vom Punkt 61 bis zum Punkt 67 mit geschlossenen Kupplungen K1, K2 (deshalb die horizontale strichlierte Linie in Figur 4 a) gefahren und die Motordrehzahl n₂₁ (Figur 4 b) bis zum Punkt 67 abgesenkt. Nun erst wird die Kupplung K2 ausgerückt, die Motordrehzahl n₂₁ wird wieder angehoben (von 67 bis 66 in Figur 4 b) und der Hydrostat übernimmt die Steuerung (von 67 bis 66 in Figur 4a), wobei er wieder bis zum Zielpunkt 66 zusätzlich die Anhebung der Motordrehzahl kompensiert.

Soll jedoch von dem Betriebspunkt 63 aus der Betriebspunkt 66 angefahren werden, so geschieht das ganz normal. Da der Schaltpunkt ja noch nicht erreicht war, wurde noch keine der Kupplungen K1,K2 betätigt oder auf Steuerung der Motordrehzahl übergangen. Wohl nimmt die Steuerung zu Kenntnis, daß bei 62 die untere Bereichsgrenze von innen nach außen überschritten wurde, sie "vergißt" aber wieder, daß Betrieb innerhalb des Intervalles stattgefunden hat. Ist daraufhin vom Betriebspunkt 66 aus der Betriebspunkt 64 außerhalb anzufahren, das Intervall also nur zu durchfahren, so erfolgt das ganz konventionell entlang der Linien 68,69.

In Figur 4 ist mit 55* noch angedeutet, daß die untere Intervallgrenze 55 für das Passieren von außen nach innen auch sehr nahe an den Schaltpunkt 51 gelegt werden kann.

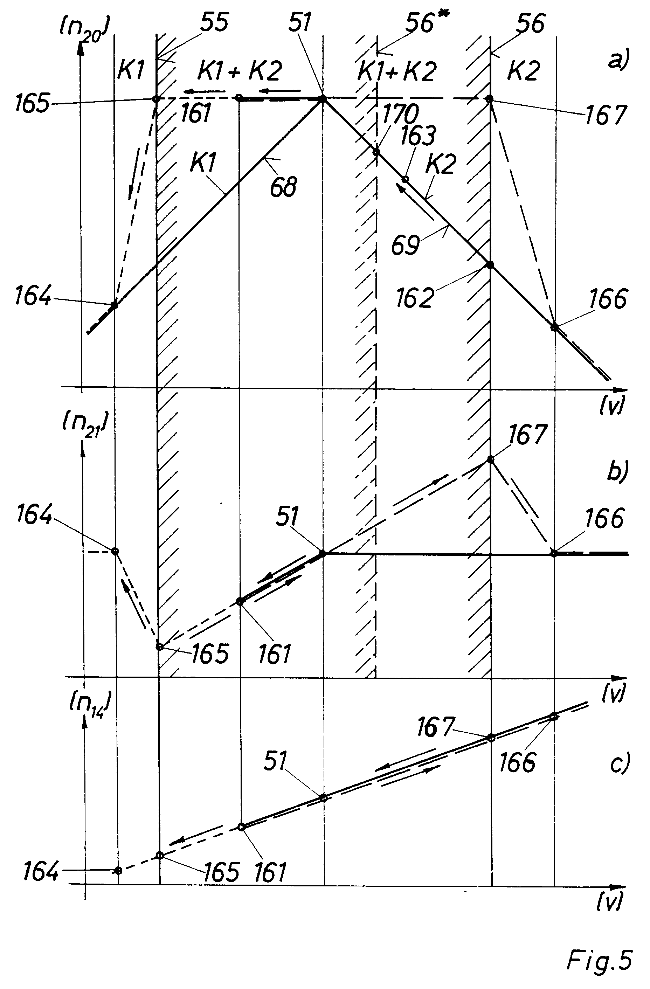

Figur 5 zeigt im Prinzip dasselbe, jedoch für das Erreichen eines Betriebspunktes innerhalb der Intervallgrenze 55,56 aus einer Geschwindigkeit die über dem Intervall liegt, also bei Verzögerung. Auch die Bezeichnung der Punkte ist analog, um 100 vermehrt. Auch hier besteht die Möglichkeit, die (in diesem Fall obere) Intervallgrenze für das Passieren von aussen nach innen sehr nahe an den Schaltpunkt 51 zu legen. Diese verlegte Intervallgrenze ist mit 56* angedeutet.

## Patentansprüche

1. Verfahren zum Betreiben einer aus einem Verbrennungsmotor und einem kontinuierlich steuerbaren Verzweigungsgetriebe bestehenden Antriebseinheit, deren Getriebe aus einer stufenlos steuerbaren hydrostatischen Motor-Pumpe-Einheit (4) und aus einem Summierungsgetriebe (10) mit zugeordneten Bereichsgetrieben (11,12) für aufeinanderfolgende Übersetzungsbereiche (V1 bis Vn) besteht, wobei die Umschaltung von einem Bereich zum nächsten in einem vorbestimmten Schaltpunkt (51,52,53) durch Schließen der dem nächsten Bereich zugeordneten Kupplung (Kn) und in der Folge Öffnen der dem vorhergehenden Bereich zugeordneten Kupplung (Kn-1) erfolgt, **dadurch gekennzeichnet,** daß bei der Wahl einer Geschwindigkeit, die bei konstanter Motordrehzahl (n₂₁) in einem definierten, den Schaltpunkt (51;52;53)) enthaltenden Intervall (55-56) liegen würde, in folgenden Schritten vorgegangen wird:
a) Ab Erreichen der Grenze des Intervalles (55-56) von außen wird bei weiterhin konstanter Motordrehzahl (n₂₁) die hydrostatische Einheit (4) bis zum Schaltpunkt (51;52;53) weitergesteuert,
b) Wenn der Schaltpunkt (51;52;53) erreicht ist, wird die dem nächsten Bereich (Vn) zugeordnete Kupplung (Kn) geschlossen, sodaß nun beide Kupplungen eingerückt sind,
c) In diesem Zustand wird durch Änderung der Motordrehzahl (n₂₁) die gewünschte Geschwindigkeit eingestellt und gehalten,
d) Wenn wieder eine außerhalb des Intervalles (55-56) liegende Geschwindigkeit gewählt wird, wird durch Änderung der Motordrehzahl bis zur Intervallgrenze (55;56) weitergesteuert,
e) Wenn diese Intervallgrenze (55;56) von innen erreicht ist, wird eine der beiden Kupplungen (Kn-1;K1) geöffnet, die Steuerung des Hydrostaten (4) freigegeben und die Drehzahl des Motors (n₂₁) den ursprünglichen konstanten Wert zurückgeführt.

2. Verfahren nach Anspruch 1, **dadurch gekennzeichnet,** daß die Intervallgrenzen (55,55*,56,56*) bezüglich des Schaltpunktes (51,52,53) unsymmetrisch und für Überschreiten auswärts und einwärts unterschiedlich definiert sind.

3. Verfahren nach Anspruch 2, **dadurch gekennzeichnet,** daß die Intervallgrenzen für Überschreiten einwärts (55*,56*) sehr nahe am Schaltpunkt (51,52,53) liegen.

4. Verfahren nach Anspruch 1, **dadurch gekennzeichnet,** daß der Hydrostat (4) lastlos geschaltet wird, sobald die dem nächsten Bereich zugeordnete Kupplung geschlossen wird und daß der Hydrostat (4) erst wieder belastet wird, bevor die dem vorhergehenden Bereich zugeordnete Kupplung geöffnet wird.

## Claims

1. A method for operating a drive unit consisting of an internal combustion engine and a continuously controllable branching transmission, of which the transmission consists of a steplessly controllable hydrostatic motor-pump unit (4) and a compound geartrain (10) with associated range transmissions (11, 12) for successive gear ratio ranges (V1 to Vn), the changeover from one range to the next being effected at a predetermined shift point (51, 52, 53) by engaging the clutch (Kn) associated with the next range and subsequently disengaging the clutch (Kn-1) associated with the preceding range, characterised in that, when selecting a speed which with constant engine revs (n₂₁) would lie in a defined interval (55-56) containing the shift point (51; 52; 53), the operation proceeds in the following steps:
a) Starting from the reaching of the limit of the interval (55-56) from outside, while the engine revs (n₂₁) remain constant, the hydrostatic unit (4) is further controlled up to the shift point (51; 52; 53),
b) When the shift point (51; 52; 53) is reached, the clutch (Kn) associated with the next range (Vn) is engaged so that now both clutches are engaged,
c) In this state the desired speed is set and held by changing the engine revs (n₂₁),
d) When a speed lying outside the interval (55-56) is again selected, further control takes place by changing the engine revs up to the interval limit (55; 56),
e) When this interval limit (55; 56) is reached from within, one of the two clutches (Kn-1; K1) is disengaged, the control of the hydrostat (4) released and the engine revs (n₂₁) are returned to the original constant value.

2. A method according to claim 1, characterised in that the interval limits (55, 55*, 56, 56*) are defined asymmetrically in relation to the shift point (51, 52, 53) and differently for passing outwardly and inwardly.

3. A method according to claim 2, characterised in that the interval limits for passing inwardly (55*, 56*) lie very close to the shift point (51, 52, 53).

4. A method according to claim 1, characterised in that the hydrostat (4) is operated without load as soon as the clutch associated with the next range is engaged and in that the hydrostat (4) is only loaded again before the clutch associated with the previous range is disengaged.

## Revendications

1. Procédé pour faire fonctionner une unité d'entraînement composée d'un moteur à combustion interne et d'un mécanisme diviseur pouvant être commandé avec variation continue, unité dont le mécanisme est composé d'une unité moteur-pompe hydrostatique (4) pouvant être commandée avec variation continue et d'un mécanisme additionneur (10) auquel sont associés des mécanismes de gammes (11, 12) prévus pour des gammes successives de rapports de transmission (V1 à Vn), le passage d'une gamme à la suivante se produisant à un point de changement prédéterminé (51, 52, 53), par l'embrayage de l'embrayage (Kn) associé à la gamme suivante et par le débrayage ultérieur de l'embrayage (Kn-1) associé à la gamme précédente, caractérisé en ce que, lorsqu'on sélectionne une vitesse qui se trouverait, à un nombre de tours constants (n₂₁) du moteur, dans un intervalle (55-56) défini qui contient le point de changement (51 ; 52 ; 53), il se produit les étapes suivantes :
a) à partir du moment où l'on atteint la limite de l'intervalle (55-56) en partant de l'extérieur, à un nombre de tours (n₂₁) du moteur qui est par ailleurs constant, l'unité hydrostatique (4) est commandée jusqu'au point de changement (51 ; 52, 53),
b) lorsque le point de changement (51 ; 52 ; 53) est atteint, l'embrayage (Kn) associé à la gamme suivante (Vn) est embrayé, de sorte que les deux embrayages sont alors embrayés,
c) dans cet état, la vitesse désirée est établie et maintenue par une variation du nombre de tours (n₂₁) du moteur,
d) lorsqu'on sélectionne de nouveau une vitesse située à l'extérieur de l'intervalle (55-56), la commande se poursuit par variation du nombre de tours du moteur jusqu'à la limite (55 ; 56) de l'intervalle,
e) lorsque cette limite (55 ; 56) de l'intervalle est atteinte de l'intérieur, l'un des deux embrayages (Kn-1 ; K1) est débrayé, la commande du groupe hydrostatique (4) est libérée et le nombre de tours du moteur (n₂₁) est ramené à la valeur constante initiale.

2. Procédé selon la revendication 1, caractérisé en ce que les limites (55, 55*, 56, 56*) de l'intervalle sont définies de façon asymétrique par rapport au point de changement (51, 52, 53) et en des points différents pour le franchissement vers l'extérieur et pour le franchissement vers l'intérieur.

3. Procédé selon la revendication 2, caractérisé en ce que les limites de l'intervalle pour le franchissement vers l'intérieur (55*, 56*) sont très proches du point de changement (51, 52, 53).

4. Procédé selon la revendication 1, caractérisé en ce que le groupe hydrostatique (4) est mis sous charge nulle dès que l'embrayage associé à la gamme suivante est embrayé, et en ce que le groupe hydrostatique (4) est d'abord remis en charge avant que l'embrayage associé à la gamme précédente soit débrayé.
